# EUROPÄISCHE PATENTSCHRIFT

(11) **EP 2 989 257 B1**
(45) Veröffentlichungstag und Bekanntmachung des Hinweises auf die Patenterteilung: **19.06.2019**
(21) Anmeldenummer: 14727384.1
(22) Anmeldetag: 07.04.2014
(51) Int. Cl.: E02B 8/08

(54) **ANORDNUNG AN FLIESSENDEN GEWÄSSERN**
ARRANGEMENT ON FLOWING BODIES OF WATER
AGENCEMENT EN EAUX COURANTES

(30) Priorität: 25.04.2013 AT 3482013
(43) Veröffentlichungstag der Anmeldung: 02.03.2016
(73) Patentinhaber: Monai, Bernhard, 9063 Maria Saal (AT)
(72) Erfinder: Monai, Bernhard, 9063 Maria Saal (AT)
(74) Vertreter: Beer & Partner Patentanwälte KG
(86) Internationale Anmeldenummer: PCT/AT2014/000073
(87) Internationale Veröffentlichungsnummer: WO 2014/172721

(56) Entgegenhaltungen:
- GB-A- 191 510 827
- US-A- 1 591 450
- US-A- 1 680 722
- US-A- 2 119 540
- US-A- 4 431 340
- US-A- 4 904 114

## Beschreibung

Die Erfindung betrifft eine Anordnung an fließenden Gewässern im Bereich eines Querbauwerks und/oder Wasserwerks, insbesondere Fischwanderhilfe, zum Transportieren von Wassertieren, insbesondere Fischen, zwischen Unterwasser und Oberwasser, mit einem im Wesentlichen vertikalen Schacht, wobei Mittel zum Anheben und Absenken des Wasserspiegels im Schacht zwischen dem Bereich des Unterwassers, insbesondere des Unterwasserspiegels, und dem Bereich des Oberwassers, insbesondere des Oberwasserspiegels, vorgesehen sind, wobei zum Ausbilden eines Lock- bzw. Leitstromes ausgehend vom Oberwasser eine Wasserleitung in das Innere des Schachtes in einen der Unterwassersohle zugeordneten Bodenbereich des Schachtes ins Unterwasser führt und wobei die dem Oberwasser zugeordnete Wand des Schachtes im Bereich des Oberwasserspiegels eine Austrittsöffnung aus dem Schacht bildet und Mittel zum Öffnen und Verschließen der Austrittsöffnung, insbesondere einen Schieber, aufweist.

Eine gattungsgemäße Anordnung ist aus der US 2,119,540 A bekannt.

Unter Querbauwerken werden natürliche und künstlich in ein Gewässer eingebrachte, quer durch ein Gewässerbett verlaufende Strukturen verstanden, welche die natürlichen Strömungsverhältnisse und damit auch die Sohl- und Uferstruktur des Gewässers beeinflussen. Beispiele für Querbauwerke sind Sohlschwellen, Grundschwellen, Stützschwellen, Sohlrampen, Sohlstufen, Sohlgleiten, Abstürze, Stauwehre oder Talsperren.

Fischpässe sind in Fließgewässern angeordnete Fischwanderhilfen, die Fischen und anderen im Wasser lebenden Tieren die Möglichkeit geben, Hindernisse, wie z.B. Stauwehre oder natürliche Sohlstufen, zu überwinden. Die Höhendifferenz der Wasserspiegel zwischen Oberwasser und Unterwasser macht es Fischen unmöglich, das Hindernis, z.B. springend, zu überwinden. Um den Abstand der Wasserspiegel von Oberwasser zu Unterwasser stufenweise zu verringern, ist es bei Fischwanderhilfen bekannt, mehrere Becken, mit unterschiedlich hohen Wasserspiegeln vorzusehen.

An vielen Standorten mit Wasserkraftwerken ist die Fallhöhe für Wasser jedoch so groß, dass bei Einhaltung der aktuellen Anforderungen für die Fallhöhe von Becken zu Becken eine sehr große Zahl von Becken notwendig ist. Zusammen mit den typischen Anforderungen für die Beckengröße (z.B. Beckenlänge = dreifache Fischlänge bei einer üblichen maßgebenden Fischlänge von etwa 1m) ergeben sich sehr große Fischwanderhilfen. Deren Bau ist selbst bei freiem Baufeld so teuer, dass sich auch an bestehenden Stauanlagen Investitionen in erneuerbare Energie durch Wasserkraft oft nicht lohnen.

Hinzu kommt, dass derartig große Wasserbaustellen nur mit großem Aufwand durchgeführt werden können. Infolge der unbekannten Untergründe, der Nähe zu alten Gebäuden und der unbekannten Qualitäten der angetroffenen Bausubstanz sind kostentreibende Überraschungen eher die Regel als die Ausnahme.

An einer Reihe von Standorten können große Fischwanderhilfen auch aus Gründen des Denkmalschutzes nicht gebaut werden, da sie in den Aspekt der alten Gebäude am und im Gewässer eingreifen würden.

Eine Ausgestaltung einer Fischwanderhilfe (auch: eines Fischpasses), mit dem bei geringem Platzbedarf ein großes Gefälle überwunden werden kann, ist ein Fischlift. Bei einem Fischlift werden Fische in einer Wanne, die in einem im Wesentlichen vertikalen Schacht vorgesehen ist, durch eine Zugvorrichtung aus dem Unterwasser zum Oberwasser gehoben. Im Bereich des Oberwassers wird die Wanne gekippt, so dass das in der Wanne befindliche Wasser zusammen mit den Fischen in das Oberwasser geleitet wird. Nachteilig bei Fischliften ist, dass diese konstruktiv aufwändig gestaltet sind und viel Energie verbrauchen, zumal das volle Gewicht der mit Wasser befüllten Wanne, in der die Fische gesammelt sind, angehoben werden muss. Zudem ist das Anlocken der Fische, damit sie im Unterwasser in die Wanne schwimmen, und insbesondere das Auskippen der Wanne im Bereich des Oberwassers, für Fische nicht schonend. Nachteilig ist weiterhin, dass Fische nur dann in den Fischlift schwimmen können, wenn die Wanne im Schacht ganz unten angeordnet ist.

Der Erfindung liegt die Aufgabe zu Grunde, eine Anordnung der eingangs genannten Art zur Verfügung zu stellen, die Nachteile des Standes der Technik nicht aufweist.

Gelöst wird diese Aufgabe erfindungsgemäß mit einer Anordnung, welche die Merkmale des Anspruchs 1 aufweist.

Bevorzugte und vorteilhafte Ausführungsformen der Erfindung sind Gegenstand der Unteransprüche.

Erfindungsgemäß ist vorgesehen, dass die Eingangsöffnung in die Wasserleitung in Strömungsrichtung des Oberwassers in den Schacht hinein gesehen nach dem Mittel zum Öffnen und Verschließen der Austrittsöffnung angeordnet ist.

Die Wände des Schachtes sind in den Bereichen, in denen der Wasserspiegel im Schacht verändert werden soll, wasserundurchlässig. Somit wird vermieden, dass Fische oder andere Wassertiere ihre gewohnte Umgebung verlassen müssen, wenn sie in einem Transportbehälter aus dem Gewässerverlauf entfernt werden. Die erfindungsgemäße Anordnung ist daher für Wassertiere besonders schonend. Zudem ist die erfindungsgemäße Anordnung besonders energiesparend, da es nicht mehr erforderlich ist, Fische in einen mit Wasser gefüllten Transportbehälter zu heben.

In einer Ausführungsform der Erfindung kann vorgesehen sein, dass die Anordnung einen im Schacht und entlang des Schachtes bewegbaren Transportbehälter für Wassertiere aufweist, vorzugsweise einen als Reuse wirkenden Korb, der vom Unterwasser zum Oberwasser und vom Oberwasser zum Unterwasser durch Auftrieb im Wasser bewegbar ist. Da der Transportbehälter durch Auftrieb auf- und abbewegt wird, wird vermieden, dass das volle Gewicht einer Wanne mit Wasser und Fischen durch eine Zugvorrichtung gezogen werden muss. Selbst wenn zusätzlich aus Vorsichtsmaßnahmen eine Zugvorrichtung vorgesehen sein sollte, die erfindungsgemäß vermeidbar ist, müsste durch den Auftrieb im Wasser nur ein geringer Teil des Gewichts des Transportbehälters gezogen werden.

Somit wird erfindungsgemäß erreicht, dass für den Betrieb der Anordnung wenig Energie notwendig ist. Zudem wird erreicht, dass das Transportieren der Fische durch Ändern des Wasserspiegels im Schacht für die Fische schonender erfolgt, als wenn die Fische in einer geschlossenen Wanne aus dem Gewässer herausgehoben werden, da die Fische zu jedem Zeitpunkt im Gewässer, d.h. ihrer natürlichen Umgebung, bleiben. Zusätzlich wird erreicht, dass der die Fische aufnehmende Transportbehälter sehr groß gestaltet werden kann, so dass die Fische ausreichend Platz haben, um allenfalls im Transportbehälter befindlichen Raubfischen auszuweichen.

In einer bevorzugten Ausführungsform der Erfindung ist vorgesehen, dass der Transportbehälter in seiner unteren Stellung, in der Wassertiere vom Unterwasser in den Transportbehälter gelangen, im Unterwasser, insbesondere im Bereich der Unterwassersohle, angeordnet ist und in seiner Position oben im Schacht, in welcher Wassertiere aus dem Transportbehälter ins Oberwasser gelangen, im Oberwasser, insbesondere im Bereich des Oberwasserspiegels, angeordnet ist. Somit können Fische mit der erfindungsgemäßen Anordnung nicht nur vom Unterwasser zum Oberwasser transportiert werden, sondern auch vom Oberwasser zum Unterwasser, wobei die Fische zu jedem Zeitpunkt im Gewässer, d.h. ihrer natürlichen Umgebung, bleiben.

Im Rahmen der Erfindung kann vorteilhafterweise vorgesehen sein, dass die dem Unterwasser zugeordnete Wand des Schachtes im Bereich der Unterwassersohle eine Ausflussöffnung für Wasser bzw. Eintrittsöffnung für Wassertiere in den Schacht sowie Mittel zum Öffnen und Verschließen dieser Öffnung, insbesondere einen Schieber, aufweist. Weiters ist vorgesehen, dass die dem Oberwasser zugeordnete Wand des Schachtes im Bereich des Oberwasserspiegels eine Austrittsöffnung aus dem Schacht und Mittel zum Öffnen und Verschließen der Austrittsöffnung, insbesondere einen Schütz oder einen Schieber, aufweist. Bei Kombination der Merkmale dieser beiden Ausführungsformen ist es möglich, den Wasserspiegel im Schacht zum Bewegen des Transportbehälters durch gezieltes Öffnen und/oder Schließen der Ein- und/oder Austrittsöffnung zu ändern.

Im Rahmen der Erfindung kann vorgesehen sein, dass die Schieber elektrisch und/oder von Hand aus betätigbar sind. Somit kann das Öffnen und Schließen der Ein- und Austrittsöffnung automatisch gesteuert werden, aber auch - wenn es die Situation erfordert - von Hand aus erfolgen.

Im Rahmen der Erfindung kann weiters vorgesehen sein, dass die dem Oberwasser zugeordnete Wand des Schachtes direkt an einer Wand eines Stauwehrs angeordnet ist oder durch eine Wand eines Stauwehrs gebildet ist. Somit ist der bei einem Stauwehr benötigte Platzbedarf für die Anordnung besonders gering.

Im Rahmen der Erfindung ist vorgesehen, dass die Eingangsöffnung in die Wasserleitung in Strömungsrichtung des Oberwassers in den Schacht hinein gesehen nach dem Mittel zum Öffnen und Verschließen der Austrittsöffnung angeordnet ist. Somit kann Wasser aus dem Oberwasser in den in seiner unteren Stellung befindlichen Transportbehälter geleitet werden, von wo aus es durch die offene Ausflussöffnung für Wasser, die gleichzeitig die Eintrittsöffnung für Wassertiere bildet, als Lockströmung in das Unterwasser austritt. Da die Lockströmung bereits im Schacht erzeugt wird, lockt sie Fische besonderes effektiv in den Transportbehälter.

Diese Art, eine Lockströmung zu erzeugen, hat zudem den Vorteil, dass trotz der Lockströmung im Transportbehälter nur wenig Wasserturbulenzen auftreten und die Fische keine Probleme haben, sich im Transportbehälter aufzuhalten, da insbesondere im Bereich seitlich neben der Mündung der Wasserleitung Ruhezonen entstehen. Durch die Lockströmung können zudem innen anhaftende Verlegungen am Transportbehälter abgespült werden.

Zum Erzeugen einer Lockströmung, welche die Fische anregt, aus dem in seiner oberen Position befindlichen Transportbehälter ins Oberwasser zu schwimmen, kann vorteilhafterweise vorgesehen sein, dass Wände des Schachtes und/oder im Schacht angeordnete Wände im Bereich des Oberwasserspiegels eine Überlaufrinne aufweisen, so dass die Lockströmung über die Ausstiegsöffnung in den Transportbehälter eintritt und seitlich durch die perforierten Seitenwände des Transportbehälters über die Überlaufkanten abfließt. Diese Strömung leitet die Fische aus dem Transportbehälter in das Oberwasser, womit der Fischaufstieg vollendet ist.

Vorzugsweise steht der Transportbehälter mit Auftriebsmitteln in Verbindung, wobei Auftriebsmittel insbesondere Schwimmer, vorzugsweise aufblasbare Schwimmer, sind. Bei aufblasbaren Schwimmern ist im Rahmen der Erfindung vorgesehen, dass diese steuerbar durch einen Kompressor mit Luft befüllt werden können und dass die Luft steuerbar aus den Schwimmern ausgelassen werden kann.

Vorzugsweise sind der Boden und die Wände des Transportbehälters wasserdurchlässig, beispielsweise gitterförmig, ausgebildet. Dies ermöglicht das Erzeugen von Leitströmungen sowohl beim Einschwimmen der Fische in den Transportbehälter als auch beim Ausschwimmen aus diesem in das Oberwasser. Zudem ist eine leichte Bauweise des Transportbehälters möglich.

In einer besonders vorteilhaften Ausführungsform ist der Transportbehälter mit Strukturen, z.B. Borstenelementen, Tonröhren, Steinen, Totholzteilen, etc. ausgestattet, damit insbesondere kleinere Fische Rückzugsmöglichkeiten haben, wenn im Transportbehälter Raubfische vorhanden sind oder im Transportbehälter die Fischdichte sehr hoch ist.

Insbesondere ist vorgesehen, dass der Transportbehälter an den der Ein- und Austrittsöffnung zugeordneten Stellen wandfrei ist, um einen ungehinderten Durchgang in den Transportbehälter hinein und aus diesem heraus zu ermöglichen.

Im Rahmen der Erfindung kann vorgesehen sein, dass dem Bereich der Ein- und/oder Austrittsöffnung des Schachtes einer Einrichtung zum Erzeugen einer Lockströmung, z.B. eine Pumpe und/oder eine Wasserleitung, zugeordnet ist, um die Intensität der Lockströmung zu erhöhen.

Die erfindungsgemäße Anordnung weist Mittel zum Anheben und Absenken des Wasserspiegels im Schacht zwischen dem Unterwasserspiegel und dem Oberwasserspiegel auf. Diese Mittel zum Anheben und Absenken des Wasserspiegels im Schacht können die Mittel zum Öffnen und Verschließen der Eintrittsöffnung und/oder der Austrittsöffnung für Wassertiere sein. Alternativ oder zusätzlich dazu kann wenigstens eine Pumpe in Verbindung mit wenigstens einer Wasserleitung, über die der Schacht mit einem Wasservorkommen in Verbindung steht, vorgesehen sein.

Im Rahmen der Erfindung kann im Unterwasser im Bereich des Schachtes, insbesondere am Schacht angrenzend, vorzugsweise der Ausflussöffnung für Wasser bzw. der Eintrittsöffnung für Wassertiere direkt zugeordnet, eine als Reuse wirkende Vorrichtung angeordnet sein.

Für eine bessere Zugänglichkeit zur Wartung kann der Transportbehälter mit einer Vorrichtung zum Bewegen des Transportbehälters entlang des Schachtes, insbesondere einer Druck- oder Zugvorrichtung, verbunden sein.

Mit der erfindungsgemäßen Anordnung kann der Wasserspiegel im Schacht auch unter den Unterwasserspiegel senkbar und/oder über den Oberwasserspiegel anhebbar sein.

In einer Ausführungsform der erfindungsgemäßen Anordnung kann vorgesehen sein, dass sie einen im Schacht und entlang des Schachtes bewegbaren Transportbehälter für Wassertiere aufweist, vorzugsweise einen als Reuse wirkenden Korb, der vom Unterwasser zum Oberwasser und vom Oberwasser zum Unterwasser durch Auftrieb im Wasser bewegbar ist.

In einer weiteren Ausführungsform der erfindungsgemäßen Anordnung kann vorgesehen sein, dass der Transportbehälter in seiner Position unten im Schacht, in welcher Wassertiere vom Unterwasser in den Transportbehälter gelangen, im Unterwasser, insbesondere im Bereich der Unterwassersohle, angeordnet ist und in seiner Position oben im Schacht, in welcher Wassertiere aus dem Transportbehälter ins Oberwasser gelangen, im Oberwasser, insbesondere im Bereich des Oberwasserspiegels, angeordnet ist.

In einer weiteren Ausführungsform der erfindungsgemäßen Anordnung kann vorgesehen sein, dass die dem Unterwasser zugeordnete Wand des Schachtes im Bereich der Unterwassersohle eine Ausflussöffnung für Wasser bzw. Eintrittsöffnung für Wassertiere in den Schacht sowie Mittel zum Öffnen und Verschließen dieser Öffnung, insbesondere einen Schieber, aufweist.

In einer weiteren Ausführungsform der erfindungsgemäßen Anordnung kann vorgesehen sein, dass die dem Oberwasser zugeordnete Wand des Schachtes im Bereich des Oberwasserspiegels eine Austrittsöffnung aus dem Schacht bildet und Mittel zum Öffnen und Verschließen der Austrittsöffnung, insbesondere einen Schieber, aufweist.

In einer weiteren Ausführungsform der erfindungsgemäßen Anordnung kann vorgesehen sein, dass die Schieber elektrisch und/oder händisch betätigbar sind.

In einer weiteren Ausführungsform der erfindungsgemäßen Anordnung kann vorgesehen sein, dass ausgehend vom Oberwasser eine Wasserleitung in das Innere des Schachtes, insbesondere in einen der Unterwassersohle zugeordneten Bodenbereich des Schachtes, vorzugsweise in einen seitlichen Bereich der dem Oberwasser zugeordneten Wand des Schachtes, führt zum Ausbilden eines Lock- bzw. Leitstromes ins Unterwasser.

In einer weiteren Ausführungsform der erfindungsgemäßen Anordnung kann vorgesehen sein, dass die Eingangsöffnung in die Wasserleitung in Strömungsrichtung des Oberwassers in den Schacht hinein gesehen nach dem Mittel zum Öffnen und Verschließen der Austrittsöffnung angeordnet ist.

In einer weiteren Ausführungsform der erfindungsgemäßen Anordnung kann vorgesehen sein, dass Wände des Schachtes und/oder im Schacht angeordnete Wände im Bereich des Oberwasserspiegels eine Überlaufrinne aufweisen.

In einer weiteren Ausführungsform der erfindungsgemäßen Anordnung kann vorgesehen sein, dass der Transportbehälter mit einer Vorrichtung zum Bewegen des Transportbehälters entlang des Schachtes, insbesondere einer Druck- oder Zugvorrichtung, verbunden ist.

In einer weiteren Ausführungsform der erfindungsgemäßen Anordnung kann vorgesehen sein, dass der Transportbehälter mit Auftriebsmitteln in Verbindung steht, wobei die Auftriebsmittel insbesondere Schwimmer, vorzugsweise aufblasbare Schwimmer, sind.

In einer weiteren Ausführungsform der erfindungsgemäßen Anordnung kann vorgesehen sein, dass der Boden und Wände des Transportbehälters wasserdurchlässig, beispielsweise gitterförmig oder gelocht, ausgebildet sind.

In einer weiteren Ausführungsform der erfindungsgemäßen Anordnung kann vorgesehen sein, dass der Transportbehälter an den der Ausflussöffnung für Wasser bzw. Eintrittsöffnung für Wassertiere und der Austrittsöffnung zugeordneten Stellen wandfrei ist.

In einer weiteren Ausführungsform der erfindungsgemäßen Anordnung kann vorgesehen sein, dass dem Bereich der Ausflussöffnung für Wasser bzw. Eintrittsöffnung für Wassertiere und/oder der Austrittsöffnung des Schachtes eine Lock- bzw. Leitstromeinrichtung, insbesondere eine Pumpe, zugeordnet ist.

In einer weiteren Ausführungsform der erfindungsgemäßen Anordnung kann vorgesehen sein, dass die Mittel zum Anheben und Absenken des Wasserspiegels im Schacht die Mittel zum Öffnen und Verschließen der Ausflussöffnung für Wasser bzw. Eintrittsöffnung für Wassertiere und/oder der Austrittsöffnung sind und/oder wenigstens eine Pumpe in Verbindung mit wenigstens einer Wasserleitung.

In einer weiteren Ausführungsform der erfindungsgemäßen Anordnung kann vorgesehen sein, dass der Wasserspiegel im Schacht unterhalb des Unterwasserspiegels senkbar und/oder oberhalb des Oberwasserspiegels anhebbar ist.

In einer weiteren Ausführungsform der erfindungsgemäßen Anordnung kann vorgesehen sein, dass im Unterwasser im Bereich des Schachtes, insbesondere am Schacht angrenzend, vorzugsweise der Ausflussöffnung für Wasser bzw. Eintrittsöffnung für Wassertiere direkt zugeordnet, eine als Reuse wirkende Vorrichtung angeordnet ist.

In einer weiteren Ausführungsform der erfindungsgemäßen Anordnung kann vorgesehen sein, dass der Transportbehälter mit Strukturen, z.B. Borstenelementen, Tonröhren, Steinen, Totholzteilen, etc. ausgestattet ist.

In einer weiteren Ausführungsform der erfindungsgemäßen Anordnung kann vorgesehen sein, dass im Bereich des Unterwassers neben dem Schacht eine Vorhaltekammer vorgesehen ist, in der eine Lockströmung erzeugt wird.

In einer weiteren Ausführungsform der erfindungsgemäßen Anordnung kann vorgesehen sein, dass im Bereich der vom Schacht abgekehrten Seite der Vorhaltekammer eine Reuse vorgesehen ist, die das Schwimmen von Fischen ausschließlich in Richtung zum Schacht hin erlaubt.

In einer weiteren Ausführungsform der erfindungsgemäßen Anordnung kann vorgesehen sein, dass eine Leitung vorgesehen ist, die vom Oberwasser in die Vorhaltekammer führt.

In einer weiteren Ausführungsform der erfindungsgemäßen Anordnung kann vorgesehen sein, dass der Leitung, die vom Oberwasser zur Vorhaltekammer führt, eine Absperreinrichtung, insbesondere ein Schieber, zugeordnet ist.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: einen bekannten Fischlift,
- Fig. 2: eine erfindungsgemäße Anordnung im Schnitt entlang des Verlaufes eines Gewässers,
- Fig. 3: eine erfindungsgemäße Anordnung im Schnitt quer zum Verlauf des Gewässers und
- Fig. 4: im Schnitt eine weitere Ausführungsform einer erfindungsgemäßen Anordnung.

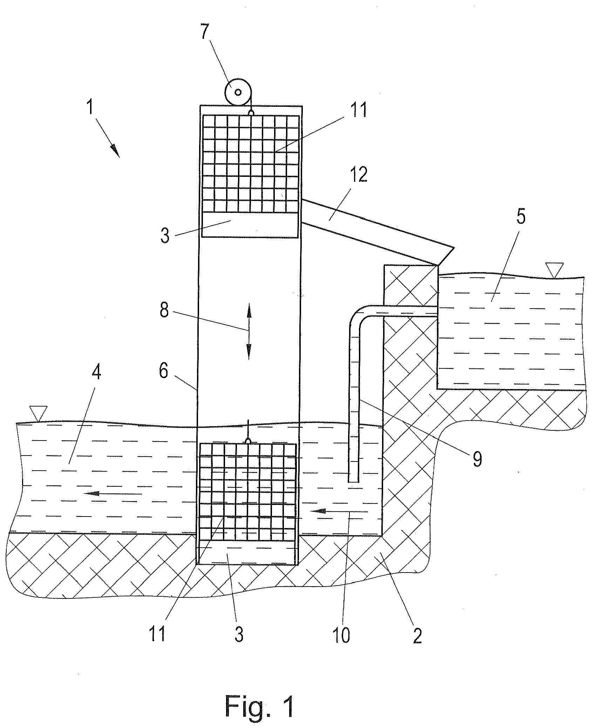

Fig. 1 zeigt einen Fischlift 1 gemäß Stand der Technik im Bereich eines Stauwehrs 2, mit welchem Fische in einer wasserundurchlässigen Wanne 3 aus dem Unterwasser 4 in das Oberwasser 5 befördert werden. Die Wanne 3 ist in einem vertikalen Schacht 6 zuerst am Grund des Unterwassers 4 angeordnet und kann durch eine angetriebene Zugvorrichtung 7 entlang des Doppelpfeils 8 auf und ab bewegt werden. Ausgehend vom Oberwasser 5 führt eine Wasserleitung 9 in das Unterwasser 4. Derart ins Unterwasser 4 geführtes Wasser erzeugt eine Lockströmung 10, nach der sich die Fische richten. Die außerhalb des Schachtes 6 erzeugte Lockströmung 10 tritt durch den Schacht 6 und lockt Fische in das Innere des Schachts 6. Dabei schwimmen die Fische in einen an der Wanne 3 angeordneten Reusenkorb 11, der ein Herausschwimmen der Fische verhindert. Anschließend werden Wanne 3 und Reusenkorb 11 mit Hilfe der Zugvorrichtung 7 aus dem Unterwasser 4 heraus in eine Stellung oberhalb des Oberwasserspiegels gehoben. Dann wird die Wanne 3 gekippt, so dass das in der Wanne 3 befindliche Wasser mit den Fischen über eine Rinne 12 in das Oberwasser 5 strömt. Nach dem Entleeren der Wanne 3 wird diese zurück gekippt und in Richtung des Doppelpfeiles 8 nach unten in das Unterwasser 4 bewegt.

Nachteilig ist bei dem in Fig. 1 gezeigten Fischlift 1, dass die Gefahr besteht, dass Fische beim Kippen der Wanne 3 am Reusenkorb 11 liegen bleiben und nicht ins Oberwasser 5 rutschen. Dann befinden sich diese Fische für eine gewisse Zeit außerhalb von Wasser an der Luft. Zudem können Fische mit dem bekannten Fischlift 1 nicht vom Oberwasser 5 zum Unterwasser 4 transportiert werden, da Fische vom Oberwasser 5 nicht in die Wanne 3 gelangen können. Die Wanne 3 muss weiterhin ausreichend Gewicht haben, damit sie im Unterwasser 4 untergeht und am Gewässerboden zu liegen kommt. Leichte Bauweisen der Wanne 3 sind daher nicht möglich, was sich nachteilig auf den Energieverbrauch auswirkt, da mit der Zugvorrichtung 7 das volle Gewicht gehoben werden muss.

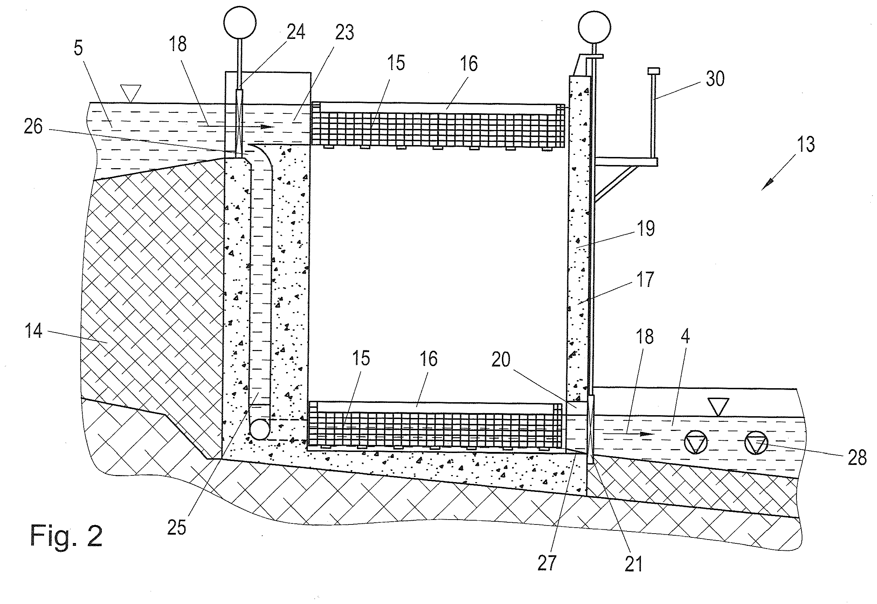

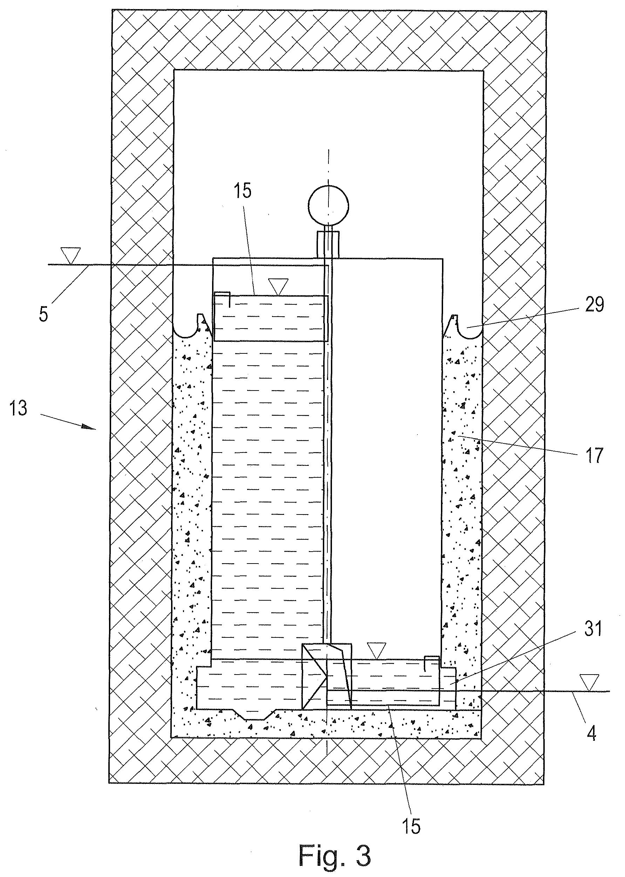

Fig. 2 und 3 zeigen eine erste Ausführungsform einer erfindungsgemäßen Anordnung in Form einer Fischwanderhilfe 13 im Bereich eines Stauwehrs 14, mit der Fische in einem wasserdurchlässigen Transportbehälter 15 aus dem Unterwasser 4 in das Oberwasser 5 befördert werden können. Der Transportbehälter 15 ist ein mit Schwimmern 16 verbundener Korb, der in einem vertikalen Schacht 17 Fische vom Unterwasser 4 zum Oberwasser 5 mitnimmt. Das Bewegen des Transportbehälters 15 erfolgt durch Auftrieb im Wasser, wenn der Schacht 17 mit Wasser gefüllt und/oder (zum Teil) entleert wird. Sowohl zum Hineinlocken von Fischen in den Transportbehälter 15 als auch zum Anregen des Herausschwimmens in das Oberwasser 5 werden Lockströmungen 18 erzeugt, wobei Fische entgegen der Richtung der Lockströmung 18 schwimmen. In Fig. 2 ist der Transportbehälter 15 aus Gründen der besseren Verständlichkeit sowohl in seiner unteren als auch in seiner oberen Stellung dargestellt. Es ist also bei dem Ausführungsbeispiel der Fig. 2 und 3 nur ein Transportbehälter 15 vorgesehen.

Die dem Unterwasser 4 zugeordnete Wand 19 des Schachtes 17 weist im Bereich der Unterwassersohle eine Eintrittsöffnung 20 in den Schacht 17 sowie einen Schieber 21 zum Öffnen und Verschließen der Eintrittsöffnung 20 auf. Die dem Oberwasser 5 zugeordnete Wand 22 des Schachtes 17 besitzt im Bereich des Oberwassers 5 eine Austrittsöffnung 23 aus dem Schacht 17 und weist einen Schieber 24 zum Öffnen und Verschließen der Austrittsöffnung 23 auf. Wenn die Schieber 21, 24 nach oben bewegt werden, geben sie die Öffnungen 20, 23 frei. Wenn die Schieber nach unten bewegt werden, werden die Öffnungen 20, 23 verschlossen. Vom Oberwasser 5 führt eine Leitung 25 in das Innere des Schachtes 17. Die Eingangsöffnung 26 der Wasserleitung 25 ist in Richtung der Lockströmung 18 gesehen nach dem Schieber 24 zum Öffnen und Verschließen der Austrittsöffnung 23 angeordnet. Die Leitung 5 mündet in einen seitlichen Bereich der dem Oberwasser 5 zugeordneten Wand 22 des Schachtes 17 in deren der Unterwassersohle zugeordneten Bodenbereich.

Der Betrieb der erfindungsgemäßen Fischwanderhilfe 13 kann beispielhaft wie folgt dargestellt werden:
In der Fangphase befindet sich der Wasserspiegel und der Transportbehälter 15 im Schacht 17 unten im Bereich des Unterwassers 4 (wie in Figur 3 rechts dargestellt). In dieser unteren Stellung des Transportbehälters 15 fluchtet der Boden des Transportbehälters 15 mit einer kleinen Rampe 27 im Bereich der Unterwassersohle. Luft in den Schwimmern 16 ist abgelassen. Der Schieber 21 im Unterwasser 4 ist ganz und der Schieber 24 im Oberwasser 5 ist zum Teil geöffnet. Durch den zum Teil offenen Schieber 24 im Bereich des Oberwassers 5 strömt Wasser aus dem Oberwasser 5 zum Teil in die Wasserleitung 25 und zum Teil in den Schacht 17. Das in den Schacht 17 eintretende Wasser füllt den Schacht 17 nicht, da Wasser aus der Eintrittsöffnung 20 in das Unterwasser 4 fließt. Wasser aus der Wasserleitung 25 strömt durch Lochbleche des Transportbehälters 15 sowie weiters durch den Schacht 17 und die Eintrittsöffnung 20 für Wassertiere in das Unterwasser 4. Dadurch wird die Lockströmung 18 erzeugt. Die Lockströmung 18 wird durch im Unterwasser 4 vorgesehene Pumpen 28 unterstützt. Fische werden durch die Lockströmung 18 angelockt und schwimmen in den Transportbehälter 15. Ein Reusenkorb kann vorgesehen sein, um zu verhindern, dass Fische aus dem Transportbehälter 15 heraus schwimmen.

Nach der Fangzeit von beispielsweise 20 min wird der Schieber 21 im Unterwasser 4 geschlossen und so die Eintrittsöffnung 20 für Wassertiere verschlossen. Die Pumpen 28 können abgeschaltet werden.

Über einen Kompressor wird Luft in die Schwimmer 16 geleitet, sodass der Transportbehälter 15 mit dem Wasserspiegel im Schacht 17 nach oben steigt. Durch die offene Austrittsöffnung 23 und durch weitere in den Schacht 17 führende Leitungen strömt Wasser in den Schacht 17, sodass der Wasserspiegel im Schacht 17 steigt und den Transportbehälter 15 nach oben in den Bereich des Oberwassers 5 mitnimmt, also anhebt. Wenn der Schieber 24 im Bereich des Oberwassers 5 bereits geschlossen ist, erfolgt das Füllen des Schachtes 17 mit Wasser nur durch die weiteren Leitungen.

In Fig. 3 zeigt die linke Hälfte den Transportbehälter 15 in der oberen Stellung und die rechte Hälfte den Transportbehälter 15 in der unteren Stellung. Die seitlichen Wände des Schachtes 17 weisen an ihrem oberen Ende Überlaufrillen 29 auf, die im Bereich der Austrittsöffnung 23 angeordnet sind. Wenn der Schieber 24 im Bereich des Oberwassers 5 bereits geschlossen ist, wird dieser nun geöffnet. Fische werden veranlasst, den Transportbehälter 15 entgegen der Lockströmung 18 zu verlassen. Der Transportbehälter 15 und die Fische befinden sich dabei bereits im Oberwasser 5.

Nachdem Fische den Transportbehälter 15 verlassen haben, wird die Austrittsöffnung 23 durch den Schieber 24 im Bereich des Oberwassers 5 geschlossen. Der Zufluss von Wasser in den Schacht 17 ist damit unterbunden. Der Schieber 21 im Unterwasser 4 wird geöffnet, sodass der Wasserspiegel im Schacht 17 sinkt und den Transportbehälter 15 nach unten mitnimmt. Wenn sich der Transportbehälter 15 auf Höhe des Unterwasserspiegels befindet, wird die Luft aus den Schwimmern 16 abgelassen, so dass der Transportbehälter 15 unabhängig vom Wasserstand im Schacht 17 in seine untere Stellung sinkt. Der Schieber 24 im Oberwasser 5 wird wieder zum Teil geöffnet, so dass Wasser aus dem Oberwasser 5 durch die Leitung 25 strömt und im Bereich des Unterwassers 4 die Lockströmung 18 erzeugt.

Der Transportbehälter 15 kann rechteckig, beispielsweise mit Seitenlängen von etwa 2,00 x 3,00 m, oder rund, beispielsweise mit einem Durchmesser von ca. 2,50 m, ausgeführt sein, so dass die größenbestimmende Fischart Äsche mit einer Länge von ca. 50 cm die Fischwanderhilfe 13 ohne Probleme nutzen kann.

Der Transportbehälter 15 kann über Rollen oder Räder an den Wänden des Schachtes 17 abgestützt und über Haken mit einer Zugvorrichtung (nicht gezeigt), insbesondere für Wartungszwecke, verbunden sein.

Zum Kontrollieren des Inhalts des Transportbehälters 15 wird der Schieber 24 im Oberwasser 5 geschlossen, wenn sich der Transportbehälter 15 in seiner oberen Stellung befindet. Der Transportbehälter 15 kann von der Zugvorrichtung gehoben werden, so dass Fische mit Käschern gefangen werden können. Zum Warten kann der Transportbehälter 15 auch ganz aus dem Wasser gehoben werden. Der Schieber 21 im Unterwasser 4 wird geöffnet, so dass der Wasserspiegel im Schacht 17 sinkt. Alternativ oder zusätzlich dazu kann Wasser aus dem Schacht 17 auch durch die weiteren Leitungen und Pumpen entfernt werden. Der Schacht 17 kann dann gereinigt werden.

Im oberen Bereich des Schachtes 17 kann außen ein Bedien- oder Beobachtungspodest 30 vorgesehen sein.

Im unteren Bereich des Schachtes 17 können zum Unterstützen der Lockströmung 18 an der Innenseite der Wände des Schachtes 17 Kanäle 31 vorgesehen sein.

Die Funktionsweise der erfindungsgemäßen Anordnung wurde anhand der Zeichnungen in einer Ausführungsform mit einem Transportbehälter 15 beschrieben, jedoch kann das Ändern des Wasserspiegels im Schacht 17 in gleicher oder ähnlicher Weise auch ohne Transportbehälter 15 erfolgen, so dass Fische im Schacht 17 vom Unterwasser 4 zum Oberwasser 5 schwimmen können.

Unabhängig davon, ob ein Transportbehälter 15 vorgesehen ist oder nicht, kann im Unterwasser 4 der Eintrittsöffnung 20 für Wassertiere ein mit einer Reuse versehenes Vorhaltebecken angeordnet sein. Dieses Vorhaltebecken dient dazu, dass Fische immer zuschwimmen können, auch wenn der Schieber 21 im Unterwasser 4 geschlossen ist. Wenn der Schieber 21 im Unterwasser 4 geschlossen ist, der Schieber 24 im Oberwasser 5 offen ist und der Schacht 17 mit Wasser befüllt ist, können Fische im Schacht 17 zum Oberwasser 5 schwimmen. Wenn der Schieber 24 im Oberwasser 5 geschlossen wird und der Schieber 21 im Unterwasser 4 geöffnet wird, sinkt der Wasserspiegel im Schacht 17. Damit auch jene Fische in den Schacht 17 gelangen, die zu einem Zeitpunkt, bei dem der Schieber 21 im Unterwasser 4 geschlossen ist, an der Fischwanderhilfe 13 ankommen, werden diese im Vorhaltebecken gesammelt und können, wenn sich der Schieber 21 im Unterwasser 4 wieder öffnet, in den Schacht 17 einschwimmen.

Dem Vorhaltebecken kann eine Einrichtung zum Erzeugen einer Lockströmung 18, insbesondere eine Pumpe 28, zugeordnet sein.

Mit der erfindungsgemäßen Anordnung wird erreicht, dass Fische permanent in die Anordnung zuschwimmen können.

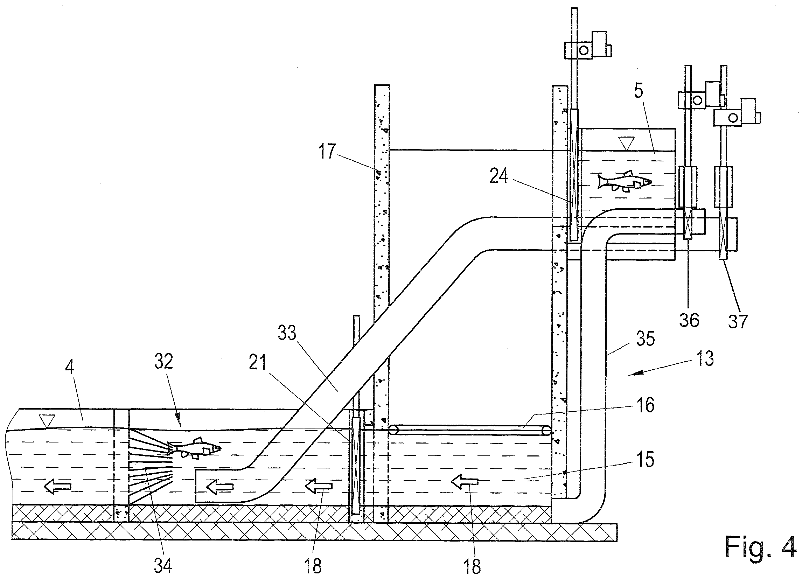

Bei der in Fig. 4 gezeigten Ausführungsform einer Fischwanderhilfe 13 ist wieder ein Schacht 17 vorgesehen, in dem als Transportbehälter 15 ein Korb auf und ab verstellbar aufgenommen ist. Der Transportbehälter 15 umfasst Schwimmer 16, die beim Füllen des Schachtes 17 mit Wasser bewirken, dass der Transportbehälter 15 durch Aufschwimmen angehoben wird.

In der in Fig. 4 gezeigten Stellung ist der Transportbehälter 15 am unteren Ende des Schachtes 17 angeordnet. Durch Wasser, das durch eine vom Oberwasser 5 zu einer im Bereich des Unterwassers 4, vor dem Schacht 17 angeordneten Vorhaltekammer 32 (eine Art "Wartezimmer") führende Leitung 33 strömt, wird in der Vorhaltekammer 32 und im Unterwasser 4 eine Lockströmung 18 erzeugt, die Fische veranlasst, durch eine Reuse 34 in die Vorhaltekammer 32 zu schwimmen.

Wenn genügend Fische in der Vorhaltekammer 32 enthalten sind, wird der Schieber 21, welcher der im unteren Ende des Schachtes 17 vorgesehenen Eintrittsöffnung 20 zugeordnet ist, geöffnet und Fische schwimmen in den Transportbehälter 15.

Durch eine weitere Leitung 35 wird nun aus dem Oberwasser 5 bei geschlossenem Schieber 21 am unteren Ende des Schachtes 17 Wasser in den Schacht 17 eingeleitet, sodass der Transportbehälter 15 unter Wirkung des von den Schwimmern 16 bewirkten Auftriebes zum oberen Ende des Schachtes 17 gehoben wird. Sobald dies erreicht ist, wird der Schieber 24 am oberen Ende des Schachtes 17 geöffnet, sodass der Transportbehälter 15 über die Austrittsöffnung 23 mit dem Oberwasser 5 in Verbindung steht. Die Fische können nun aus dem Transportbehälter 15 direkt in das Oberwasser 5 schwimmen.

Fig. 4 zeigt noch, dass im Bereich des Oberwassers 5 zwei weitere Schieber 36 und 37 vorgesehen sind, wovon der Schieber 36 das Zuführen von Wasser über die Leitung 33 in die Vorhaltekammer 32 zum Erzeugen der Lockströmung 18 regelt. Der andere Schieber 37 dient dazu, das Zuführen von Wasser aus dem Oberwasser 5 durch die Leitung 35 in den unteren Bereich des Schachtes 17 zu regeln.

Eine Ausführungsform der Anordnung der Erfindung kann beispielsweise wie folgt beschrieben werden:
Eine Anordnung an fließenden Gewässern im Bereich eines Querbauwerks und/oder Wasserwerks, in Form einer Fischwanderhilfe 13, zum Transportieren von Wassertieren, insbesondere Fischen, zwischen Unterwasser 4 und Oberwasser 5, weist einen im Wesentlichen vertikalen Schacht 17 auf. Der Wasserspiegel im Schacht 17 ist zwischen dem Unterwasserspiegel und dem Oberwasserspiegel veränderbar. Ein im Schacht 17 und entlang des Schachtes 17 bewegbarer korbartiger Transportbehälter 15 für Wassertiere wird wegen an ihm vorgesehenen, mit Luft befüllten, Schwimmern 16 durch das im Schacht 17 ansteigende/absinkende Wasser vom Unterwasser 4 zum Oberwasser 5 und vom Oberwasser 5 zum Unterwasser 4 bewegt.

## Patentansprüche

1. Anordnung an fließenden Gewässern im Bereich eines Querbauwerks und/oder Wasserwerks, insbesondere Fischwanderhilfe (13), zum Transportieren von Wassertieren, insbesondere Fischen, zwischen Unterwasser (4) und Oberwasser (5), mit einem im Wesentlichen vertikalen Schacht (17), wobei Mittel zum Anheben und Absenken des Wasserspiegels im Schacht (17) zwischen dem Bereich des Unterwassers (4), insbesondere des Unterwasserspiegels, und dem Bereich des Oberwassers (5), insbesondere des Oberwasserspiegels, vorgesehen sind, wobei zum Ausbilden eines Lock- bzw. Leitstromes (18) ausgehend vom Oberwasser (5) eine Wasserleitung (25) in das Innere des Schachtes (17) in einen der Unterwassersohle zugeordneten Bodenbereich des Schachtes (17) ins Unterwasser (4) führt und wobei die dem Oberwasser (5) zugeordnete Wand (22) des Schachtes (17) im Bereich des Oberwasserspiegels eine Austrittsöffnung (23) aus dem Schacht (17) bildet und Mittel zum Öffnen und Verschließen der Austrittsöffnung (23), insbesondere einen Schieber (24), aufweist, **dadurch gekennzeichnet, dass** die Eingangsöffnung (26) in die Wasserleitung (25) in Strömungsrichtung des Oberwassers (5) in den Schacht (17) hinein gesehen nach dem Mittel zum Öffnen und Verschließen der Austrittsöffnung (23) angeordnet ist.

2. Anordnung nach Anspruch 1, **dadurch gekennzeichnet, dass** sie einen im Schacht (17) und entlang des Schachtes (17) bewegbaren Transportbehälter (15) für Wassertiere aufweist, vorzugsweise einen als Reuse wirkenden Korb, der vom Unterwasser (4) zum Oberwasser (5) und vom Oberwasser (5) zum Unterwasser (4) durch Auftrieb im Wasser bewegbar ist.

3. Anordnung nach Anspruch 2, **dadurch gekennzeichnet, dass** der Transportbehälter (15) in seiner Position unten im Schacht (17), in der Wassertiere vom Unterwasser (4) in den Transportbehälter (15) gelangen, im Unterwasser (4), insbesondere im Bereich der Unterwassersohle, angeordnet ist und in seiner Position oben im Schacht (17), in welcher Wassertiere aus dem Transportbehälter (15) ins Oberwasser (5) gelangen, im Oberwasser (5), insbesondere im Bereich des Oberwasserspiegels, angeordnet ist.

4. Anordnung nach einem der Ansprüche 1 bis 3, **dadurch gekennzeichnet, dass** die dem Unterwasser (4) zugeordnete Wand (19) des Schachtes (17) im Bereich der Unterwassersohle eine Ausflussöffnung für Wasser bzw. Eintrittsöffnung (20) für Wassertiere in den Schacht (17) sowie Mittel zum Öffnen und Verschließen der Eintrittsöffnung (20), insbesondere einen Schieber (21), aufweist.

5. Anordnung nach einem der Ansprüche 2 bis 4, **dadurch gekennzeichnet, dass** der Transportbehälter (15) mit einer Vorrichtung zum Bewegen des Transportbehälters (15) entlang des Schachtes (17), insbesondere einer Druck- oder Zugvorrichtung, verbunden ist.

6. Anordnung nach einem der Ansprüche 2 bis 5, **dadurch gekennzeichnet, dass** der Transportbehälter (15) mit Auftriebsmitteln in Verbindung steht, wobei Auftriebsmittel insbesondere Schwimmer (16), vorzugsweise aufblasbare Schwimmer (16), sind.

7. Anordnung nach einem der Ansprüche 2 oder 4 bis 6, **dadurch gekennzeichnet, dass** der Boden und Wände des Transportbehälters (15) wasserdurchlässig, beispielsweise gitterförmig oder gelocht, ausgebildet sind und/oder dass der Transportbehälter (15) an den der Ausflussöffnung für Wasser bzw. Eintrittsöffnung (20) für Wassertiere und der Austrittsöffnung (23) zugeordneten Stellen wandfrei ist.

8. Anordnung nach einem der Ansprüche 4 bis 7, **dadurch gekennzeichnet, dass** dem Bereich der Ausflussöffnung für Wasser bzw. Eintrittsöffnung (20) für Wassertiere und/oder der Austrittsöffnung (23) des Schachtes (17) eine Lock- bzw. Leitstromeinrichtung, insbesondere eine Pumpe (28), zugeordnet ist.

9. Anordnung nach einem der Ansprüche 4 bis 8, **dadurch gekennzeichnet, dass** die Mittel zum Anheben und Absenken des Wasserspiegels im Schacht (17) die Mittel zum Öffnen und Verschließen der Ausflussöffnung für Wasser bzw. Eintrittsöffnung (20) für Wassertiere und/oder der Austrittsöffnung (23) sind und/oder wenigstens eine Pumpe (28) in Verbindung mit wenigstens einer Wasserleitung.

10. Anordnung nach einem der Ansprüche 1 bis 9, **dadurch gekennzeichnet, dass** der Wasserspiegel im Schacht (17) unterhalb des Unterwasserspiegels senkbar und/oder oberhalb des Oberwasserspiegels anhebbar ist.

11. Anordnung nach einem der Ansprüche 2 bis 10, **dadurch gekennzeichnet, dass** der Transportbehälter (15) mit Strukturen, z.B. Borstenelementen, Tonröhren, Steinen, Totholzteilen, etc. ausgestattet ist.

12. Anordnung nach einem der Ansprüche 1 bis 11, **dadurch gekennzeichnet, dass** im Bereich des Unterwassers (4) neben dem Schacht (17) eine Vorhaltekammer (32) vorgesehen ist, in der eine Lockströmung (18) erzeugt wird, insbesondere dass im Bereich der vom Schacht (17) abgekehrten Seite der Vorhaltekammer (32) eine Reuse (34) vorgesehen ist, die das Schwimmen von Fischen ausschließlich in Richtung zum Schacht (17) hin erlaubt.

13. Anordnung nach Anspruch 12, **dadurch gekennzeichnet, dass** eine Leitung (33) vorgesehen ist, die vom Oberwasser (5) in die Vorhaltekammer (32) führt, insbesondere dass der Leitung (33), die vom Oberwasser (5) zur Vorhaltekammer (32) führt, eine Absperreinrichtung, insbesondere ein Schieber (37), zugeordnet ist.

## Claims

1. Assembly on flowing bodies of water in the region of a transverse structure and/or waterworks, in particular a fish migration aid (13), for transporting aquatic animals, in particular fish, between tailwater (4) and headwater (5), comprising a substantially vertical shaft (17), wherein means are provided for raising and lowering the water level in the shaft (17) between the region of the tailwater (4), in particular the tailwater level, and the region of the headwater (5), in particular the headwater level, wherein, in order to form an attraction current or guide current (18), a water line (25) leads from the headwater (5) into the interior of the shaft (17) and into the tailwater (4) in a bottom region of the shaft (17) that is associated with the tailwater bed, and wherein the wall (22) of the shaft (17) that is associated with the headwater (5) forms an exit opening (23) from the shaft (17) in the region of the headwater level and has means for opening and closing the exit opening (23), in particular a gate valve (24), **characterized in that** the inlet opening (26) into the water line (25), as seen in the direction in which the headwater (5) flows into the shaft (17), is arranged after the means for opening and closing the exit opening (23).

2. Assembly according to claim 1, **characterized in that** it has a transport container (15) for aquatic animals which is movable in the shaft (17) and along the shaft (17), preferably a basket which acts as a fish trap, and which is movable from the tailwater (4) to the headwater (5) and from the headwater (5) to the tailwater (4) by buoyancy in the water.

3. Assembly according to claim 2, **characterized in that** the transport container (15), in its position at the bottom of the shaft (17), in which aquatic animals pass from the tailwater (4) into the transport container (15), is arranged in the tailwater (4), in particular in the region of the tailwater bed, and in its position at the top of the shaft (17), in which aquatic animals pass from the transport container (15) into the headwater (5), is arranged in the headwater (5), in particular in the region of the headwater level.

4. Assembly according to one of claims 1 to 3, **characterized in that** the wall (19) of the shaft (17) that is associated with the tailwater (4) has in the region of the tailwater bed an outflow opening for water and entry opening (20) for aquatic animals to enter the shaft (17), as well as means for opening and closing the entry opening (20), in particular a gate valve (21).

5. Assembly according to one of claims 2 to 4, **characterized in that** the transport container (15) is connected to a device for moving the transport container (15) along the shaft (17), in particular a pushing or pulling device.

6. Assembly according to one of claims 2 to 5, **characterized in that** the transport container (15) is connected to buoyancy means, wherein the buoyancy means are in particular floats (16), preferably inflatable floats (16).

7. Assembly according to one of claims 2 or 4 to 6, **characterized in that** the base and walls of the transport container (15) are water-permeable, for example grid-like or perforated, and/or **in that** the transport container (15) has no wall at the locations associated with the outflow opening for water and entry opening (20) for aquatic animals and the exit opening (23).

8. Assembly according to one of claims 4 to 7, **characterized in that** an attraction current device or guide current device, in particular a pump (28), is associated with the region of the outflow opening for water and entry opening (20) for aquatic animals and/or the exit opening (23) of the shaft (17).

9. Assembly according to one of claims 4 to 8, **characterized in that** the means for raising and lowering the water level in the shaft (17) are the means for opening and closing the outflow opening for water and entry opening (20) for aquatic animals and/or the exit opening (23), and/or at least one pump (28) in conjunction with at least one water line.

10. Assembly according to one of claims 1 to 9, **characterized in that** the water level in the shaft (17) can be lowered below the tailwater level and/or raised above the headwater level.

11. Assembly according to one of claims 2 to 10, **characterized in that** the transport container (15) is equipped with structures, for example bristle elements, clay pipes, stones, deadwood parts, etc.

12. Assembly according to one of claims 1 to 11, **characterized in that** a holding chamber (32) is provided in the region of the tailwater (4) next to the shaft (17), in which holding chamber an attraction current (18) is generated, in particular **in that** a fish trap (34) is provided in the region of the side of the holding chamber (32) that is remote from the shaft (17), which fish trap allows fish to swim only in the direction towards the shaft (17).

13. Assembly according to claim 12, **characterized in that** a line (33) is provided which leads from the headwater (5) into the holding chamber (32), in particular **in that** the line (33) which leads from the headwater (5) to the holding chamber (32) is associated with a shut-off device, in particular a gate valve (37).

## Revendications

1. Installation sur des eaux courantes au niveau d'un éperon et/ou d'un ouvrage hydraulique, en particulier ascenseur à poissons (13), pour le transport d'animaux aquatiques, en particulier de poissons, entre un bief d'aval (4) et un bief d'amont (5), avec une gaine (17) sensiblement verticale, dans lequel des moyens pour élever et abaisser le niveau d'eau dans la gaine (17) sont prévus entre la zone du bief d'aval (4), en particulier la surface du bief d'aval, et la zone du bief d'amont (5), en particulier la surface du bief d'amont, dans laquelle une conduite d'eau (25) partant du bief d'amont (5) mène dans le bief d'aval (4) dans l'intérieur de la gaine (17) dans une zone de fond de la gaine (17) associée au lit du bief d'aval, pour former un courant d'attraction ou de guidage (18) et dans laquelle la paroi (22) de la gaine (17) associée au bief d'amont (5) forme au niveau de la surface du bief d'amont une ouverture de sortie (23) de la gaine (17) et présente des moyens pour ouvrir et fermer l'ouverture de sortie (23), en particulier une vanne (24), **caractérisée en ce que** l'ouverture d'entrée (26) dans la conduite d'eau (25) est disposée, vue dans le sens d'écoulement du bief d'amont (5) vers l'intérieur de la gaine (17), après le moyen pour ouvrir et fermer l'ouverture de sortie (23).

2. Installation selon la revendication 1, **caractérisée en ce qu'**elle présente un récipient de transport (15) pour des animaux aquatiques qui peut être déplacé dans la gaine (17) et le long de la gaine (17), de préférence un panier fonctionnant comme une nasse, qui peut être déplacé du bief d'aval (4) au bief d'amont (5) et du bief d'amont (5) au bief d'aval (4) par sa force portante dans l'eau.

3. Installation selon la revendication 2, **caractérisée en ce que** dans sa position basse dans la gaine (17), dans laquelle des animaux aquatiques passent du bief d'aval (4) dans le récipient de transport (15), le récipient de transport (15) est disposé dans le bief d'aval (4), en particulier au niveau du lit du bief d'aval, et dans sa position haute dans la gaine (17), dans laquelle des animaux aquatiques passent du récipient de transport (15) dans le bief d'amont (5), il est disposé dans le bief d'amont (5), en particulier au niveau de la surface du bief d'amont.

4. Installation selon l'une des revendications 1 à 3, **caractérisée en ce que** la paroi (19) de la gaine (17) associée au bief d'aval (4) présente au niveau du lit du bief d'aval une ouverture de sortie pour l'eau ou une ouverture d'entrée (20) dans la gaine (17) pour des animaux aquatiques, ainsi que des moyens pour ouvrir et fermer l'ouverture d'entrée (20), en particulier une vanne (21).

5. Installation selon l'une des revendications 2 à 4, **caractérisée en ce que** le récipient de transport (15) est relié à un dispositif pour déplacer le récipient de transport (15) le long de la gaine (17), en particulier un dispositif de poussée ou de traction.

6. Installation selon l'une des revendications 2 à 5, **caractérisée en ce que** le récipient de transport (15) est en liaison avec des moyens de portance, lesquels moyens de portance sont en particulier des flotteurs (16), de préférence des flotteurs gonflables (16).

7. Installation selon l'une des revendications 2 ou 4 à 6, **caractérisée en ce que** le fond et les parois du récipient de transport (15) sont conformés de façon à laisser passer l'eau, par exemple grillagés ou perforés, et/ou **en ce que** le récipient de transport (15) est dépourvu de paroi aux endroits associés à l'ouverture d'écoulement de l'eau ou à l'ouverture d'entrée (20) pour les animaux aquatiques et à l'ouverture de sortie (23).

8. Installation selon l'une des revendications 4 à 7, **caractérisée en ce que** la zone de l'ouverture d'écoulement de l'eau ou ouverture d'entrée (20) pour les animaux aquatiques et/ou de l'ouverture de sortie (23) de la gaine (17) sont associées à un dispositif créant un courant d'attraction ou de guidage, en particulier une pompe (28).

9. Installation selon l'une des revendications 4 à 8, **caractérisée en ce que** les moyens pour relever et abaisser le niveau d'eau dans la gaine (17) sont les moyens pour ouvrir et fermer l'ouverture d'écoulement de l'eau ou ouverture d'entrée(20) pour les animaux aquatiques et/ou l'ouverture de sortie (23) et/ou au moins une pompe (28) reliée à au moins une conduite d'eau.

10. Installation selon l'une des revendications 1 à 9, **caractérisée en ce que** le niveau d'eau dans la gaine (17) peut être abaissé en dessous de la surface du bief d'aval et/ou relevé au-dessus de la surface du bief d'amont.

11. Installation selon l'une des revendications 1 à 10, **caractérisée en ce que** le récipient de transport (15) est équipée de structures telles que des éléments de brosse, des tuyaux en argile, des pierres, des morceaux de bois mort, etc.

12. Installation selon l'une des revendications 1 à 11, **caractérisée en ce qu'**est prévue au niveau du bief d'aval (4), à côté de la gaine (17), une chambre de retenue (32) dans laquelle un courant d'attraction (18) est créé, et en particulier **en ce qu'**est prévue au niveau du côté de la chambre de retenue (32) tourné à l'opposé de la gaine (17) une nasse (34), qui ne permet le passage de poissons qu'en direction de la gaine (17).

13. Installation selon la revendication 12, **caractérisée en ce qu'**il est prévu une conduite (33) qui mène du bief d'amont (5) à la chambre de retenue (32), et en particulier **en ce que** la conduite (33) qui mène du bief d'amont (5) à la chambre de retenue (32) est associée à un dispositif de barrage, en particulier à une vanne (37).
